# EUROPEAN PATENT SPECIFICATION

(11) **EP 1 228 687 B1**
(45) Date of publication and mention of the grant of the patent: **13.04.2005**
(21) Application number: 02445011.6
(22) Date of filing: 30.01.2002
(51) Int. Cl.: A01K 89/00, A01K 89/015, A01K 89/016, A01K 89/01, A01K 89/02

(54) **Precision spindle unit for low friction performance**
Präzisionsspindel mit geringer Reibung
Abre de precision avec une friction reduite

(30) Priority: 01.02.2001 SE 0100317
(43) Date of publication of application: 07.08.2002
(73) Proprietor: Aktiebolaget SKF, S-415 50 Göteborg (SE)
(72) Inventor: Andrén, Lars, 443 45 Sjövik (SE); Östling, Folke, 412 67 Göteborg (SE); Richard, Maurice, 77810 Thomery (SE)
(74) Representative: Westman, Per Börje Ingemar

(56) References cited:
- US-A- 4 131 245

## Description

The present invention refers to a precision spindle unit for low friction performance and intended to be incorporated in rotary systems, requiring high stability and aiming at very low losses and making possible high rotational speeds.

Such spindle units can for instance be used in hobby articles, toys, measuring instruments and e.g. for fishing reels for supporting the spool thereof in a manner giving a reliable and smooth operation and also being advantageous from noise aspects, etcetera.

One factor for determining the quality of a fishing reel is the so called free spool rotation time, which is defined as the time such a spool will continue to rotate after it has been subjected to a defined influence. The calculation of the free spool rotation time is accomplished thus that the reel is attached to a fixture with the spool arranged substantially horizontal. A line of 500 mm length attached to a 20 g lead weight is affixed to the spool via a tape. Then the line is wound up on the spool, and the weight then is dropped. The time is measured from the moment the weight is dropped until the spool as stopped rotating.

One purpose of the present invention is to provide a spindle unit having so good operation properties that it will give the spool of a fishing reel, supported thereby, a time of free spool rotation, which is substantially increased, and this is achieved by means of an improved spindle unit which has been given the features defined in the accompanying claim 1.

However as earlier said the spindle unit according to the invention is not limited to such an application but can be used also in other applications where a smooth low friction performance is required.

Hereinafter the invention will be further described with reference to a non-limiting embodiment illustrated in the accompanying drawing.
Fig. 1 is a side view, showing the spindle unit according to the invention partly in section.
Fig. 2 is a side view corresponding to Fig. 1 but showing a planar view of the spindle unit.

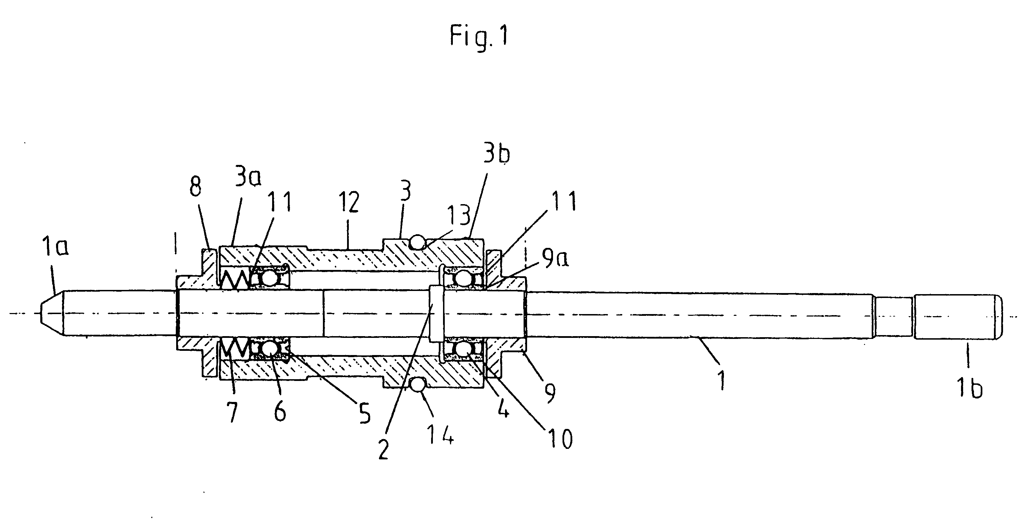

Fig. 1 shows in side view and partly in section the components of a low fiction precision spindle unit according to the present invention. The unit incorporates an elongated shaft 1, having a first end 1a and a second end 1b and at least one collar 2, provided between its first and second ends. A tubular, substantially sleeve-formed bearing housing 3 having a first end 3a and a second end 3b is provided to enclose the shaft 1 over a portion between the first and second ends 1a, 1b of the shaft. A first rolling bearing 4, preferably - and here shown as - a deep groove ball bearing, is mounted with its inner race ring on the shaft in abutting contact against one side face of the collar 2. The outer race ring of this first bearing 4 is mounted with a tight fit in the interior of the bearing housing near the second end 3b thereof, whereby this first bearing 4 is a locating bearing, i.e. it is not displaceable relative to the bearing housing 3 or to the shaft 1, although the inner race ring thereof can be mounted with a loose fit on the shaft. At its opposite, first end 3a the bearing housing 3 is further provided with a cylindrical portion of bigger inner diameter ending at a distance from the first end 3a with a radial shoulder 5 facing the said first end 3a of the bearing housing. A second rolling bearing 6, also in this case preferably a deep groove ball bearing, is arranged as a free bearing on the shaft 1 with loose fit both on the shaft 1 and in the cylindrical portion of bigger diameter in the bearing housing 3. The outer race ring of this second bearing 6 abuts the shoulder 5 in the bearing housing and is biased against this by means of a resilient member, such as a spring 7, the other end of which rests against a locking washer 8 being firmly arrested to the shaft 1, e.g. by interference fit. It is also important that the two bearings used are positioned as far apart in axial direction as possible, as this will give a more stiff and stable performance.

At the second side 3b of the bearing housing is also provided a locking washer 9, which is firmly fitted to the shaft e.g. with an interference fit, and which has an annular, axially projecting flange 9a abutting the side face of the first rolling bearing 4 opposite to the collar 2 on the shaft 1. Thus the inner race ring of the first bearing 4 is clamped between the collar 2 on the shaft and the flange 9a. As the second bearing 6 is a free bearing which has its inner race ring biased by the spring 7 towards the first bearing these two bearings will be arranged in back-to-back arrangement, and therefore axial loads acting in both directions can be accommodated, and a stiff arrangement with ability to take up tilting moments is obtained.

The locking washers 8 and 9 which are firmly fitted to the shaft 1 extend radially outside the inner bore of the bearing housing 3 and they are positioned so relative to the end faces of the bearing housing, that a narrow slot 10 is obtained between each end face of the bearing housing and the end face of the associated locking washer facing it. Each one of the first and the second bearings 4, 6 are provided with built-in seals 11 at their sides facing outwards, and the small slot 10 between each locking washer and the bearing housing provides a further labyrinth seal, which latter also has an ability during rapid mutual rotation of the shaft and the bearing housing to give a pumping effect out of the bearing housing rather than a suction effect into the bearing housing. Thereby the interior of the bearing housing is very well sealed off from the environment.

The low friction performance achieved with the precision spindle as described permits very high rotational speeds, as a result of the low losses.

The outer envelope surface of the bearing housing in the embodiment shown is provided with a cental recessed portion 12, and it furthermore has a circumferential groove 13 in which is positioned a resilient, compressible member 14, preferably an O-ring member.

The actual design of the outer envelope surface of the bearing housing of course is to be adapted to the purpose for which the spindle unit is intended. In the embodiment illustrated and described the spindle unit is primarily intended for supporting a spool of a fishing reel, whereby the recessed portion 12 in the outside of the bearing housing provides shoulders for taking up axial loads in one direction and also defining the position of the spindle unit and its internal bearings in relation to the spool, and the resilient O-ring member 14 provides for radial freedom of play between the bearing housing 3 and the surrounding member, i.e. in the embodiment illustrated a fishing reel spool.

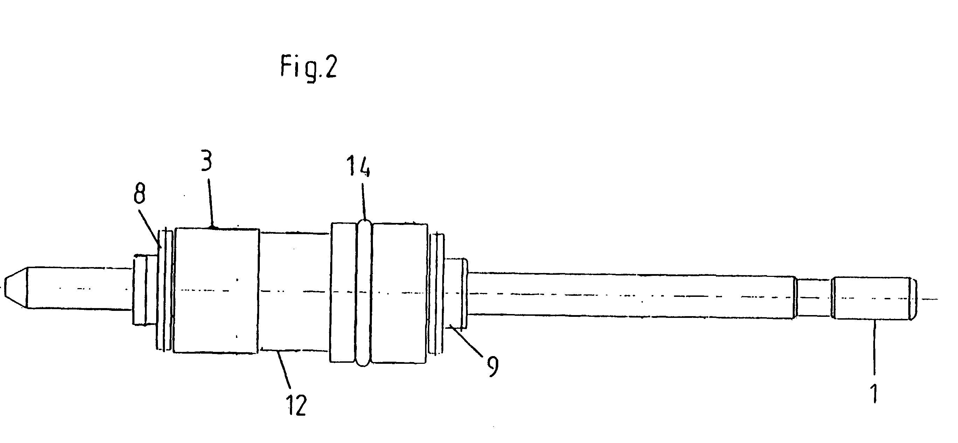

Fig. 2 shows a view corresponding to Fig. 1 but without incorporating any sectional portions, and from this view is seen the outer appearance of the spindle unit in the embodiment intended for a fishing reel spool.

In the embodiment described and illustrated the shaft 1 is preferably a stainless steel shaft, whereas the bearing housing 3 is made from aluminium. Preferably the external surface of the bearing housing is provided with an anodic coating. The locking washers 8, 9 are preferably made from brass, whereas the O-ring member preferably is a standard O-ring of rubber.

Although the invention has been shown and described in connection with a specific bearing arrangement intended for a specific, it is evident that the bearing arrangement and the intended use as mentioned above can be changed without departing from the scope of the appended claims.

## Claims

1. A precision spindle unit for low friction performance, incorporating in combination:
an elongated shaft (1),
a tubular housing (3) surrounding the shaft and having a bigger inner diameter than the diameter of the shaft,
in the interior of the housing a first rolling bearing (4) mounted on the shaft and abutting with a first side of its inner race ring against a collar (2) provided on the shaft,
a first locking washer (9) affixed to the shaft with an interference fit and provided with an axial annular flange (9a), which engages the second side of the inner race ring of the first rolling bearing (4), thus that this first bearing is axially arrested between the collar (2) on the shaft and the annular flange (9a) on the first locking washer (9),
a second rolling bearing (6) provided in the interior of the housing (3) and having a loose fit on the shaft,
a second locking washer (8) fitted with interference fit to the shaft,
a resilient member (7) provided between the second locking washer (8) and the side of the inner race ring of the second rolling bearing (6), which is facing axially outwards,
a radial shoulder (5) projecting inwards from the inner surface of the housing, against which shoulder the side of the inwardly directed outer race ring of the second rolling bearing (6) is engaging,
whereby the second bearing (6) by influence from the resilient member (7) is biased between the resilient member (7) and the first inwardly facing shoulder (5) in the housing,
the first and the second locking washers (8,9) being arranged to extend radially along at least a portion of the tubular material of the housing at a short distance from the opposed side faces (3a, 3b) of the housing thereby forming with this a slot seal (10) at each axial side of the housing, whereby each one of the first and the second rolling bearings (4, 6), at their outwardly facing sides are provided with an integral seal (11).

2. A precision spindle unit as claimed in claim 1,
**characterized therein,**
that the first and second bearings (4, 6) are positioned as far from each other as permitted by axial length of the bearing housing (3).

3. A precision spindle unit as claimed in claim 1 or 2,
**characterized therein,**
that the first and second rolling bearings (4, 6) are both deep groove ball bearings, whereby one of the ball bearings (4) is a locating bearing and the other is a free bearing (6), the biasing of the free bearing (6) towards the locating bearing (4) by means of said resilient member (7), thereby causing the bearing combination to be positioned in a back-to-back arrangement.

4. A precision spindle unit as claimed in anyone of claims 1 to 3,
**characterized therein,**
that the resilient member (7) is a spring of stainless steel arranged around the shaft (1).

5. A precision spindle unit as claimed in anyone of the preceding claims,
**characterized therein,**
that the sleeve-formed bearing housing (3) is made of aluminium and has an anodic coating on the external surface.

## Patentansprüche

1. Präzisionsspindel mit niedriger Reibung, die in Kombination folgendes umfaßt:
eine längliche Welle (1),
ein röhrenförmiges Gehäuse (3), das die Welle umgibt und einen Innendurchmesser größer als der Durchmesser der Welle besitzt,
im Inneren des Gehäuses ein erstes Wälzlager (4), das auf der Welle montiert ist und mit einer ersten Flanke seines Innenrings an einem Kragen (2) anliegt, der an der Welle vorgesehen ist,
eine erste Sicherungsscheibe (9), die auf der Welle im Preßsitz angebracht ist und mit einem axialen, ringförmigen Flansch (9a). versehen ist, der an der zweiten Flanke des Innenrings des axialen Wälzlagers (4) angreift, so daß das erste Lager zwischen dem Kragen (2) an der Welle und dem ringförmigen Flansch (9a) an der Sicherungsscheibe (9) axial arretiert ist,
ein zweites Wälzlager (6), das im Inneren des Gehäuses (3) vorgesehen ist und mit Spiel auf der Welle sitzt, eine zweite Sicherungsscheibe (8), die im Preßsitz auf der Welle befestigt ist,
ein elastisches Element (7), das zwischen der zweiten Sicherungsscheibe (8) und der Flanke des Innenrings des zweiten Wälzlagers (6) vorgesehen ist, die axial nach außen weist,
und einen Radialabsatz (5), der von der Innenfläche des Gehäuses nach innen weist und an welchem die Flanke des nach innen weisenden äußeren Laufrings des zweiten Wälzlagers (6) angreift,
wobei das zweite Lager (6) unter dem Einfluß des elastischen Elements (7) zwischen dem elastischen Element (7) und dem ersten nach innen weisenden Absatz (5) in dem Gehäuse vorgespannt ist, die erste und die zweite Sicherungsscheibe (8) so angeordnet sind, daß sie sich radial entlang wenigstens eines Bereiches des Röhrenmaterials des Gehäuses in geringem Abstand zu den entgegengesetzt liegenden Stirnflanken (3a, 3b) des Gehäuses erstrecken und dadurch mit diesen eine Spaltdichtung (10) an jedem axialen Ende des Gehäuses bilden, und das erste und das zweite Wälzlager (4, 6) an ihren nach außen weisenden Stirnflanken mit einer integrierten Dichtung (11) versehen sind.

2. Präzisionsspindel nach Anspruch 1, **dadurch gekennzeichnet, daß** das erste und das zweite Lager (4, 6) so weit voneinander weg angeordnet sind, wie es durch die axiale Länge des Lagergehäuses (3) gestattet ist.

3. Präzisionsspindel nach Anspruch 1 oder 2, **dadurch gekennzeichnet, daß** das erste und das zweite Wälzlager (4, 6) beides Rillenkugellager sind, wobei eines der Kugellager (4) ein Festlager und das andere ein Loslager (6) ist und die Vorspannung des Loslagers (6) in Richtung des Festlagers (4) mit Hilfe des elastischen Elements (7) erfolgt und dadurch bewirkt, daß die Lagerkombination in einer Anordnung Rücken an Rücken positioniert ist.

4. Präzisionsspindel nach einem der Ansprüche 1 bis 3, **dadurch gekennzeichnet, daß** das elastische Element (7) eine Feder aus rostfreiem Stahl ist, die um die Welle (1) angeordnet ist.

5. Präzisionsspindel nach einem der vorhergehenden Ansprüche, **dadurch gekennzeichnet, daß** das hülsenförmige Lagergehäuse (3) aus Aluminium besteht und einen anodischen Überzug auf der Außenfläche besitzt.

## Revendications

1. Ensemble d'arbre de précision pour une performance de friction réduite, englobant, en combinaison :
• un arbre allongé (1),
• un logement tubulaire (3), entourant l'arbre et ayant un diamètre intérieur plus grand que le diamètre de l'arbre,
• à l'intérieur du logement, un premier palier à roulement (4), monté sur l'arbre et heurtant, avec une première face de sa bague de roulement intérieure, un collier (2), prévu sur l'arbre,
• une première rondelle d'arrêt (9), immobilisée sur l'arbre, avec un joint à ajustement serré et munie d'une bride annulaire axiale (9a), qui vient en prise avec la deuxième face de la bague de roulement intérieure du premier palier à roulement (4), de sorte que ce premier palier soit retenu axialement entre le collier (2), situé sur l'arbre et la bride annulaire (9a), située sur la première rondelle d'arrêt (9),
• un deuxième palier à roulement (6), prévu à l'intérieur du logement (3) et possédant un ajustement avec jeu, situé sur l'arbre,
• une deuxième rondelle d'arrêt (8), montée avec un joint à ajustement serré sur l'arbre,
• un élément élastique (7), prévu entre la deuxième rondelle d'arrêt (8) et le côté de la bague de roulement intérieure du deuxième palier à roulement (6), qui fait face axialement vers l'extérieur,
• un épaulement radial (5), faisant saillie vers l'intérieur depuis la surface intérieure du palier, épaulement contre lequel le côté de la bague de roulement extérieure, dirigée vers l'intérieur, du deuxième palier à roulement (6) vient en prise,
• moyennant quoi le deuxième palier (6) est poussé, sous l'influence, exercée par l'élément élastique (7), entre l'élément élastique (7) et le premier épaulement, faisant face vers l'intérieur (5), dans le logement,
• les première et deuxième rondelles d'arrêt (8, 9) étant agencées pour s'étendre radialement le long, au moins, d'une partie du matériau tubulaire du logement, à une courte distance des faces latérales opposées (3a, 3b) du logement, formant, par ce moyen, avec celui-ci, un joint à fente (10) sur chaque face axiale du logement, moyennant quoi chacun des premier et deuxième paliers à roulement (4, 6) est muni, sur leurs côtés, faisant face vers l'extérieur, d'un joint incorporé (11).

2. Ensemble d'arbre de précision selon la revendication 1,
**caractérisé en ce**
**que** les premier et deuxième paliers (4, 6) sont positionnés aussi loin l'un de l'autre que ce qui est autorisé par la longueur axiale du logement de palier (3).

3. Ensemble d'arbre de précision selon la revendication 1 ou 2,
**caractérisé en ce**
**que** les premier et deuxième paliers à roulement (4, 6) sont tous deux des roulements à billes à rainure profonde, moyennant quoi l'un des roulements à billes (4) est un palier à joues et l'autre palier est un palier libre (6), la poussée du palier libre (6) vers le palier à joues (4) au moyen dudit élément élastique (7), amenant, par ce moyen, la combinaison de paliers à être positionnée dans un agencement en opposition.

4. Ensemble d'arbre de précision selon l'une quelconque des revendications 1 à 3,
**caractérisé en ce**
**que** l'élément élastique (7) est un ressort en acier inoxydable, disposé autour de l'arbre (1).

5. Ensemble d'arbre de précision selon l'une quelconque des revendications précédentes,
**caractérisé en ce**
**que** le logement de palier en forme de manchon (3) est fait en aluminium et possède un revêtement anodique sur la surface extérieure.
